# EUROPEAN PATENT SPECIFICATION

(11) **EP 4 111 649 B1**
(45) Date of publication and mention of the grant of the patent: **14.10.2026**
(21) Application number: 21712330.6
(22) Date of filing: 22.02.2021
(51) Int. Cl.: H04L 45/00, H04L 45/02, H04L 45/50, H04L 45/64, H04L 69/22, H04L 69/04, H04L 12/46

(54) **MINIMIZING DIFFERENCES IN SEGMENT IDENTIFIERS FOR SEGMENT ROUTING**
MINIMIERUNG VON UNTERSCHIEDEN IN SEGMENTIDENTIFIKATOREN FÜR SEGMENTROUTING
RÉDUCTION AU MINIMUM DES DIFFÉRENCES DANS DES IDENTIFIANTS DE SEGMENTS POUR LE ROUTAGE DE SEGMENTS

(30) Priority: 15.04.2020 US 202063010518 P
(43) Date of publication of application: 04.01.2023
(73) Proprietor: Huawei Technologies Co., Ltd., Shenzhen, Guangdong 518129 (CN)
(72) Inventor: CHEN, Huaimo, Plano, Texas 75024 (US)
(74) Representative: Grünecker Patent- und Rechtsanwälte PartG mbB
(86) International application number: PCT/US2021/019044
(87) International publication number: WO 2021/211209

(56) References cited:
- EP-A1- 3 675 449
- US-A1- 2014 369 356
- LI C LI HUAWEI TECHNOLOGIES C XIE CHINA TELECOM K LEE LG U+ H TIAN F ZHAO CAICT J GUICHARD FUTUREWEI TECHNOLOGIES C LI CHINA TELEC: "Compressed SRv6 Network Programming; draft-li-spring-compressed-srv6-np-02.txt", no. 2, 25 February 2020 (2020-02-25), pages 1 - 24, XP015137894, Retrieved from the Internet <URL:https://tools.ietf.org/html/draft-li-spring-compressed-srv6-np-02> [retrieved on 20200225]
- LI C LI HUAWEI TECHNOLOGIES W CHENG CHINA MOBILE C XIE C LI CHINA TELECOM H TIAN F ZHAO CAICT Z: "Generalized Segment Routing Header; draft-lc-6man-generalized-srh-00.txt", 11 February 2020 (2020-02-11), pages 1 - 21, XP015137709, Retrieved from the Internet <URL:https://tools.ietf.org/html/draft-lc-6man-generalized-srh-00> [retrieved on 20200211]

## Description

### TECHNICAL FIELD

In general, this disclosure describes techniques for forwarding a packet in a segment routing network. More specifically, this disclosure ensures that the packet is forwarded with a compact segment routing header.

### BACKGROUND

In traditional internet protocol (IP) network routing, IP packets are forwarded based on a routing table built by routing protocols. The route taken by the IP packets is usually the shortest path calculated by the routing protocols. In segment routing, the source chooses a path and encodes it in the packet header as an ordered list of segments. The rest of the network executes the encoded instructions.

In an Internet Protocol version 6 (IPv6) data plane, an ordered list of segments is encoded in a routing extension header; however, new hardware is required. In segment routing version 6 (SRv6), a Segment Routing IPv6 Header (SRH) is added to an original packet as an IPv6 extension header that may cause the original packet to grow indefinitely. In service function chaining (SFC), the network service header (NSH) and an associated transport encapsulation header are added to the original packet/frame. The IPv6 extension headers and transport encapsulation headers increase the size of the packet, resulting in the potential for the packet to exceed packet size limits. LI C LI HUAWEI TECHNOLOGIES C XIE CHINA TELECOM K LEE LG U+ H TIAN F ZHAO CAICT J GUICHARD FUTUREWEI TECHNOLOGIES C LI CHINA TELEC, "Compressed SRv6 Network Programming; draft-li-spring-compressed-srv6-np-02txt", no. 2, (20200225), pages 1 - 24, COMPRESSED SRV6 NETWORK PROGRAMMING; DRAFT-LI-SPRING-COMPRESSED-SRV6-NP-02.TXT; INTERNET-DRAFT: SPRING WORKING GROUP, INTERNET ENGINEERING TASK FORCE, IETF; STANDARDWORKINGDRAFT, INTERNET SOCIETY, discloses employment of compressed SIDs and a compressed SRH comprising a flag field, a tag field as well as a segment list.

### SUMMARY

Disclosed herein are techniques that compress the Segment Routing Internet Protocol version 6 (IPv6) Header by compacting the group of segment identifiers (SIDs) having the common B bits of locator and R bits of function (optionally, arguments) into compressed segment identifiers (cSIDs) that comprise only the unique L bits of the locator (and possibly part of function and arguments). By compressing the group of SIDs in such a way, forwarding an encapsulated packet reduces network bandwidth usage and consequently increases packet transmission rate.

A first aspect relates to a method implemented by a first node of a segment routing (SR) network domain comprising: receiving, by the first node from a second node of the SR network domain, a packet with an internet protocol (IP) header and a segment routing header (SRH), wherein the packet is passing through the SR network domain in accordance with segment identifiers (SIDs), wherein the SIDs have a first number of common consecutive data units, wherein the IP header includes a destination address (DA) for the packet, wherein the SRH comprises a segment list, a flag field, and a tag field, wherein the segment list includes compressed SIDs (cSIDs) that correspond to at least some of the SIDs, wherein each cSID comprises unique consecutive data units of a corresponding SID, wherein the unique consecutive data units correspond to a second number of data units, wherein the flag field of the SRH comprises a first sub-field having a value of the first number, wherein the tag field of the SRH comprises a second sub-field and a third sub-field, wherein the second sub-field comprises a value of the second number, and wherein the third sub-field comprises a pointer to one of the cSIDs; updating, by the first node, a portion of the DA in the IP header with the one of the cSIDs based on the third sub-field of the SRH; and forwarding, by the first node, the packet with the IP header and the SRH to a third node of the SR network domain in accordance with the updated DA. Replacing the portion of the DA comprises, in response to determining that the pointer of the third sub-field points to a cSID that spans over two segments, replacing the portion of the DA with cSID portions from the two segments.

Optionally, in any of the preceding aspects, another implementation of the aspect provides that updating the portion of the DA comprises: identifying the portion of the DA to be updated using the first sub-field and the second sub-field of the SRH; and replacing the identified portion of the DA with the one of the cSIDs indicated by the pointer of the third sub-field.

Optionally, in any of the preceding aspects, another implementation of the aspect provides that identifying the portion of the DA comprises: determining a starting position of the portion based on the value of the first number at the first sub-field of the SRH; determining a length of the portion based on the value of the second number at the second sub-field of the SRH; and determining a location of the portion based on the starting point and the length.

Optionally, in any of the preceding aspects, another implementation of the aspect provides that, after replacing the portion of the DA and before forwarding the packet to the third node, updating the third sub-field with a second pointer that points to another one of the cSIDs in order.

Optionally, in any of the preceding aspects, another implementation of the aspect provides that updating the third sub-field comprises, in response to determining that the pointer points to a last cSID of a segment, updating the third sub-field with the second pointer that points to an initial cSID of a next segment in the order.

Optionally, in any of the preceding aspects, another implementation of the aspect provides that the SRH further comprises a segment left field for indicating a first segment in the segment list, and wherein the method further comprises in response to determining that the pointer points to a last cSID of a segment, updating the segment left field to point to a second segment that is subsequent to the first segment.

Optionally, in any of the preceding aspects, another implementation of the aspect provides that the first node is a transit node of the SR network domain.

Optionally, in any of the preceding aspects, another implementation of the aspect provides that the SR network domain is a network domain supporting an SR over Internet Protocol version 6 (SRv6) data plane.

Optionally, in any of the preceding aspects, another implementation of the aspect provides that the data unit is one of a byte, nibble, and bit.

A second aspect relates to a node device, comprising: a receiver configured to receive a packet; a transmitter configured to transmit the packet; a memory coupled to the receiver and the transmitter, the memory storing instructions; and a processor coupled to the memory, the processor configured to execute the instructions to cause the node device to execute the method in any of the disclosed embodiments.

A second aspect relates to a system, comprising: a first node device; and a second node device in communication with the first node device, wherein the first node device or the second node device includes the node device that performs the method in any of the disclosed embodiments.

For the purpose of clarity, any one of the foregoing embodiments may be combined with any one or more of the other foregoing embodiments to create a new embodiment within the scope of the present disclosure.

These and other features will be more clearly understood from the following detailed description taken in conjunction with the accompanying drawings and claims.

The invention is defined by the appended claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates a network.
FIG. 2 illustrates a segment routing header (SRH).
FIG. 3 illustrates a schematic diagram for generating a basket of compressed segment identifiers (cSIDs) at an ingress node of a segment routing (SR) network domain.
FIG. 4 illustrates a basket of cSIDs.
FIG. 5 illustrates an example of a method of forwarding a packet implemented by a node in the SR network domain not being part of the present invention.
FIG. 6 illustrates an embodiment of a method of forwarding a packet implemented by a node in the SR network domain.
FIG. 7 is a schematic diagram of a node in the SR network domain.
FIG. 8 is a schematic diagram of an embodiment of a means for forwarding a segment in the SR network domain.

### DETAILED DESCRIPTION

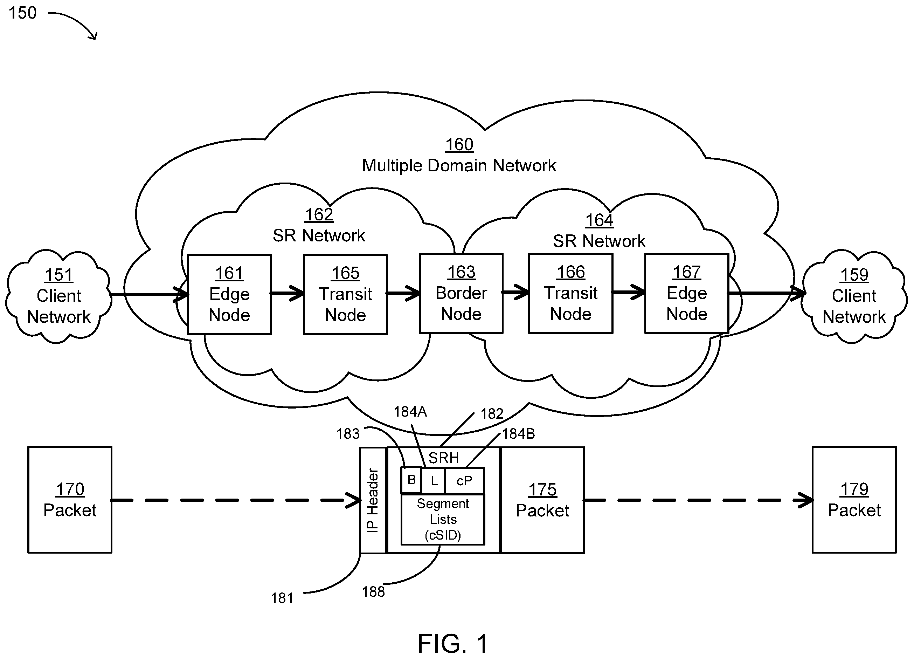

FIG. 1 illustrates a network 150 (e.g., an aggregation of one or more networks of one or more different entities). As shown, network 150 includes client networks 151 and 159 (which are of the same kind of network) communicatively coupled via edge nodes 161 and 167 (acting as an ingress or an egress node) of network 160 that includes multiple, N domains (162, 164) of network nodes, with N being a non-zero integer, interconnected via border node(s) (163). Each of client networks 151 and 159 may include hosts (e.g., end nodes) with upper-layer applications that communicate via network 150. Some of the hosts in client network 151 and/or 159 are Segment Routing-capable in that they can generate and process Segment Routing (SR) packets. The end nodes of the client networks 151 and 159 can transmit a packet (or a native packet) to the edge nodes 161 and 167 of the network 160. The packet can be an Internet Protocol version 4 (IPv4) packet, Internet Protocol version 6 (IPv6) packet, Ethernet frame/packet, or other protocol packet.

The edge nodes 161 and 167 process packets received from networks 151 and 159, which may include encapsulating or otherwise processing these packets into SR (or SR-Multiprotocol Label Switching (MPLS)) packets such as by adding a SR header (SRH, sometime also referred to as a segment routing extension header) (and possibly another IP header) to these packets according to a data plane ascertained Segment Routing policy.

An edge node (161, 167) or another node within network 160 determines a Segment Routing policy (e.g., list of segments or a segment list) that includes segments that represent IP addresses (e.g., IPv6 addresses)) to apply to packets of a different packet flow. These policies can change in response to network conditions, network programming, etc. The Segment Routing policy specifies to add one or more SRHs 182, each with one or more segment lists 188, resulting in a Segment Routing packet 175 having one or more SRHs 182. A native packet 170 is received without an SRH (possibly with an IP Destination Address that is a Segment Identifiers (SID)/IP address of the receiving node 161 or 167), and the receiving node 161 or 167 encapsulates the native packet 170 in an SR packet 175 including one or more added SRHs 182, each including one or more Segment lists 188. The node 161 or 167 also adds an IP header 181 that comprises a destination address (DA) of the packet. A packet 170 is received with a Segment Routing header (not shown in FIG. 1), and with the receiving node 161 or 167 adding one or more SRHs 182 resulting in a Segment Routing packet including one or more added SRHs 182, each including one or more Segment lists 188. In contrast, and for each of these scenarios, a single SRH 182 could have been used that includes all of the segments in one segment list 188.

An SID (e.g., an SRv6 SID) includes a locator and a function (and optionally, any argument). The locator indicates which node in the multiple domain network 160 a packet 170 is to be routed to in order to perform the function. The function may be any possible function having any optional argument. A group of SIDs has two common parts - one is the same common prefix of the first B bits; the other is the common function and arguments of the last R bits. The middle L bits of these SRv6 SID are different, where L = 128 - B - R bits. Accordingly, the group of SIDs can be compressed to cSIDs each having L bits of a unique locator. The segment list 188 of the SRH 182 includes one or more cSIDs.

The SRH 182 also includes multiple fields such as a flag field with a B sub-field 183, and a tag field with an L sub-field 184A and a cSID pointer (cP) sub-field 184B. The B sub-field 183 is used to indicate a length of common consecutive data units in the group of SIDs. The L sub-field 184A is defined for a size of a cSID. The cP sub-field 184B is used for a pointer to an active (or next) cSID.

After adding the SRH 182 and IP header 181 to the packet 175, the edge nodes 161 and 167 forward the encapsulated packet to transit nodes 165, 166. The transit nodes 165, 166 receive the encapsulated packet 175 and update a destination address (DA) in the IP header 181 based on a cSID in the segment list 188 (by using a value in the cP sub-field 184B). Accordingly, the transit nodes 165, 166 forward the encapsulated packet 175 (which includes an updated IP header 181) to the next node (e.g., the border node 163 or edge node 167) in the multiple domain network 160 in accordance with the updated DA. Once the encapsulated packet 175 travels through the multiple domain network 160, the edge nodes 161 and 167 eventually decapsulate or remove the SRH 182 (and possibly the IP header 181) and forward the native packet 179 into network 159 or 151.

Disclosed herein are techniques that compress the SRH 182 by compacting the group of SIDs having the common B bits of locator and R bits of function (optionally, arguments) into cSIDs that comprises only the unique L bits of the locator (and possibly part of function and arguments). By compressing the group of SIDs in such a way, forwarding an encapsulated packet reduces network bandwidth usage and consequently increases packet transmission rate.

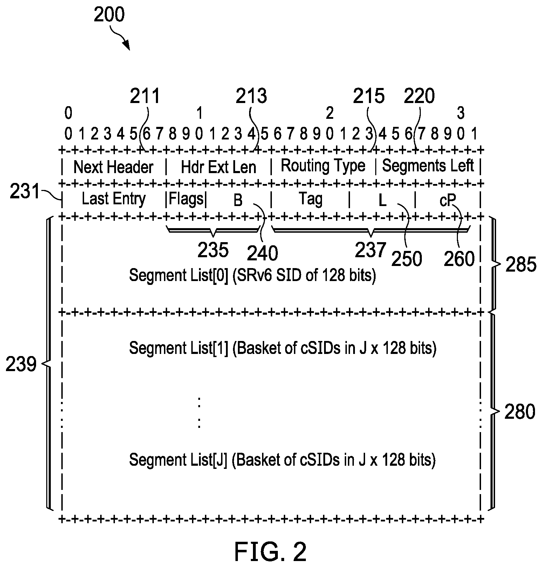

FIG. 2 illustrates a segment routing header (SRH) 200. The SRH 200 is similar to the SRH 182 in FIG. 1. As illustrated, the SRH 200 includes a number of fields that increase the size of the data packet. In particular, the SRH 200 comprises a Next Header field 211, Hdr Ext Len field 213, Routing Type field 215, Segments Left (SL) field 220, Last Entry field 231, Flag field 235, Tag field 237, and a set of segment lists 239.

The Next Header field 211 comprises an 8-bit selector. The Next Header field 211 is used to identify a type of header immediately following the SRH. The Hdr Ext Len field 213 comprises an 8-bit unsigned integer. The Hdr Ext Len field 213 is used to indicate a length of the routing header (RH) in 8-octet units, not including the first 8 octets. The Routing Type field 215 comprises an 8-bit identifier of a particular routing header variant. The SL field 220 comprises an 8-bit unsigned integer. The SL field 220 is used to identify a number of remaining segments in the segment list 239 before reaching the final destination. The SL value is decremented at each segment. The Last Entry field 231 contains an index of the last element in a segment list.

The Flag field 235 comprises 8 bits of flags. In one embodiment, the Flag field 235 includes a B sub-field 240. The B sub-field 240 is used to indicate a length of common consecutive data units in a group of SIDs. The length can be measured in bytes, nibbles, or bits. In one embodiment, the size of B is 4 bits if using a byte as a data unit, 5 bits if using a nibble as a data unit, and 7 bits if using a bit as a data unit.

The Tag field 237 is used to tag a packet associated with the SRH 200 as part of a class or group of packets. In one embodiment, the Tag field 237 include an L sub-field 250 and a cSID pointer (cP) sub-field 260. The L sub-field 250 is defined for a size of a cSID. The cP sub-field 260 is used for a pointer to an active (or next) cSID. In one embodiment, if a size and position of a cSID in the segment list 239 are in bytes, nibbles, or bits, the size of L sub-field 250 and cP sub-field 260 is 4, 5, or 7 bits, respectively. If a position of a cSID is represented in bytes, the last 4 bits of original 16-bit Tag field 237 is used as the cP sub-field 260. For example, the pointer would point to a first byte of active or next cSID in a segment indicated by the SL field 220. If the position of a cSID is represented in nibbles, the last 5 bits of original 16-bit Tag field 237 is used as the cP sub-field 260. In such a case, the pointer of the cP sub-field 260 would point to the first nibble of active or next cSID in the segment. On the other hand, if the position of a cSID is represented in bits, the last 7 bits of original 16-bit Tag field 237 is defined as the cP sub-field 260. The pointer of the cP sub-field 260 would point to the first bit of active or next cSID in the segment.

The segment list 239 includes one or more segments. The segments are arranged in order that reflects the path of the corresponding packet. Each segment is identifiable by the value of the SL field 220 as an index and has a size of 128 bits. A segment comprises one SID, or one or more cSIDs. As shown in FIG. 2, the segment list 239 can include a basket (or a group of) cSIDs (i.e., Segment List [1] to [J] 280), as well as an SID (i.e., Segment List [0] 285). In another embodiment, the segment list 239 can include only the cSIDs.

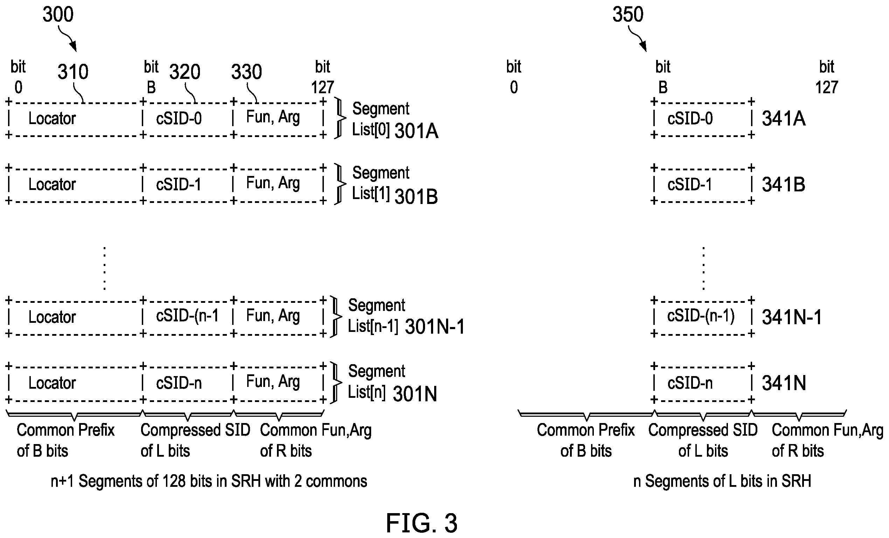

FIG. 3 illustrates a schematic diagram for generating a basket of compressed segment identifiers (cSIDs) at an ingress node of a segment routing (SR) network domain. Segment routing is defined in more detail in the Internet Engineering Task Force (IETF) draft "SRv6 Network Programming" (https: //datatracker. ietf. org/doc/draft-filsfils-spring-srv6- network-programming) by C. Filsfils, et al., published October 7, 2020. This document describes how network instructions (functions) are inserted into an IPv6 packet header using a Segment Routing Header (SRH). By way of example, the 128-bit SRv6 SID (IPv6 Destination Address) is structured as illustrated in FIG. 3. As illustrated in FIG. 3, the SID 301A-301N includes a locator having a common prefix (which is part of a locator) 310 and a unique suffix (referred to as a cSID) 320. The locator indicates which node a packet is to be routed to in order to perform the function 330. The function 330 may be any possible function having any optional argument. Generally, the length of the SID 301A-301N is fixed.

As shown in FIG. 3, the ingress node can receive a segment list 300 having (n+1) segments of 128 bits. The ingress node receives the segments 301A to 301N correspond to the SR version 6 (SRv6) segment identifiers (SIDs) from SRv6 SID-0 to SID-n in an SRv6 policy. Each segment 301A to 301N represents an SRv6 SID of 128 bits. The SID contains a locator, function and arguments. These SRv6 SIDs have two common parts - one is the same common prefix of the first B bits; the other is the common function and arguments of the last R bits. The middle L bits of these SRv6 SID are different, where L = 128 - B - R bits.

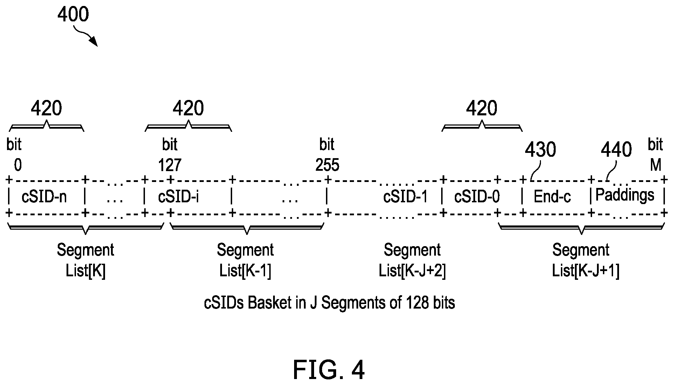

The ingress node can compress the SIDs (or remove the common parts) to (n+1) cSIDs of L bits 341A-341N into a basket of cSIDs 350. The basket of cSIDs 350 will be described in detail with respect to FIG. 4 below. Each cSID 341A-341N would be less than 128 bits. The ingress node can include the basket of cSIDs 350 in the SRH instead of the segment list 300. Accordingly, the ingress node significantly reduces the size of the SRH by (n+1) x (B+R) bits.

FIG. 4 illustrates a basket of cSIDs (hereinafter, the basket) 400. As shown in FIG. 4, the basket 400 contains one or more compressed SIDs (cSIDs) 420. That is, the basket 400 contains the cSIDs 420 in order within one or more segments of 128 bits. Each cSID 420 occupies L bits in a segment or two adjacent segments. For example, cSID-n is stored in the first L bits of Segment List[K] and cSID-(n-1) is also stored in the L bits next to cSID-n in the same segment, Segment List[K]. On the other hand, cSID-i is stored in two adjacent segments: Segment List[K] and Segment List[K - 1]. The first part of cSID-i, such as F bits is stored in the last F bits of Segment List[K] and the rest of cSID-i, such as (L - F) bits is stored in the first (L - F) bits of Segment List[K - 1].

At the end of the cSIDs, the basket 400 contains an End-of-cSIDs (End-c) 430 after the last cSID for indicating an end of the compression. The End-c 430 has the same length (e.g., L bits) as that of a cSID. In one embodiment, the End-c 430 is all zeros of L bits, which is reserved for End-c 430. In another embodiment, the End-c 430 is all ones of L bits. After the End-c 430, paddings 440 can be added in order to fill any empty spaces in the last segment. The paddings 440 can be set to all zeros or ones. In another embodiment, the first or last SID (which is not compressed) can be included in a list of segments before or after the basket 400.

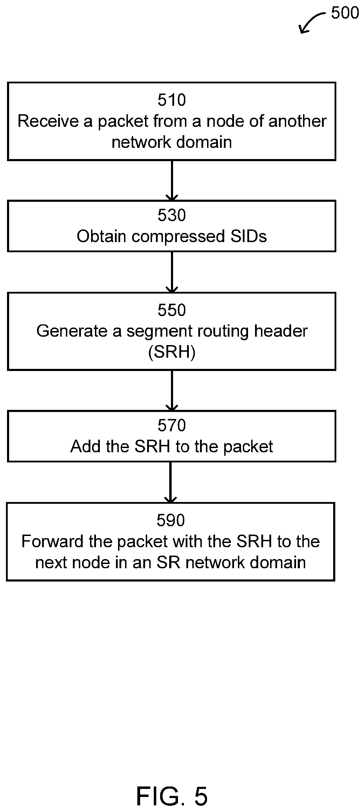

FIG. 5 illustrates an example of a method 500 of forwarding a packet implemented by a node in a segment routing (SR) network domain (e.g., an edge node 161, 167, or a border node 163) not being part of the invention. The method 500 improves the forwarding process by significantly reducing a size of a segment routing header that is to be attached to the packet. By having such a compact segment routing header, a transmission of the packet requires less network bandwidth and results in an efficient transmission.

In block 510, the node receives a packet from a node of another network domain. The packet that is to pass through the SR network domain in accordance with segment identifiers (SIDs). The node is an ingress node of the SR network domain. The node is a border node of the SR network domain. The SR network domain is a network domain that supports an SR over Internet Protocol version 6 (SRv6) data plane. An SID has a value of 128 bits. An SID includes a locator, function, and arguments. When a segment routing policy for an explicit traffic engineering path is applied to steer the packet at an edge node (e.g., the ingress node) of the network domain, SIDs are generated and added to the packet to provide guidance to nodes in the network domain to navigate the packet through the path. At least some of the SIDs have a number (e.g., B bits) of common consecutive data units (e.g., a byte, nibble, or bit). As illustrated in FIG. 3, a group of SIDs can have a common prefix of B bits in the locator. That is, the group of SIDs has a unique suffix (i.e., rest of the locator) of L bits in the locator. Moreover, the group of SIDs can also include R bits of common function and arguments. Accordingly, an SID in the group comprises B bits of the common prefix, L bits of the unique suffix, and R bits of the common function and arguments in order. The group of SIDs can have at least one of the common function or arguments.

In block 530, the node obtains compressed SIDs (cSIDs) that correspond to the group of SIDs (that have the common prefix of B bits in the locator). A cSID comprises unique consecutive data units (e.g., bits) of a corresponding SID. For example, a cSID is the unique suffix of the locator having a value of L bits as illustrated in Fig. 3.

In order to determine the cSIDs, the node generates the SIDs for the packet in accordance with an SR policy of the SR network domain. The node can identify the group of SIDs having the common prefix of B bits in the locator. The node can identify the group of SIDs based on a binding SID. Once the group of SIDs is determined, the node extracts the unique suffix in a respective SID as a cSID for each SID in the group. An SID has a size or length of 128 bits. In such a case, a corresponding cSID has a size that is less than 128 bits (e.g., 128 bits less the B bits of the common prefix and the R bits of the common function and arguments).

At block 510, the node can receive the cSIDs from another node either in the same or different network domain. As such, in order to determine the cSIDs at block 530, the node identifies the received cSIDs.

In block 550, the node generates a segment routing header (SRH) 200. As illustrated in FIG. 2, the SRH 200 has several fields. The node creates an SRH 200 that has a flag field 235 with a first sub-field (indicated by a B sub-field 240 in FIG. 2), a tag field 237 with a second sub-field (indicated by an L sub-field 250 in FIG. 2) and third sub-field (indicated by a cP sub-field 260 in FIG. 2), and a segment list (indicated by Segment List [0] to [J] in FIG. 2). Te flag field 235 and tag field 237 do not include any other sub-fields.

Once the SRH 200 is created, the node inserts a value into the B sub-field 240 of the flag field 235 in the SRH 200. The node identifies common consecutive data units in the group of the SIDs. In an implementation, the node determines a common prefix in the locators of the SIDs. The node further determines a size of the common prefix as B bits. Accordingly, the node inserts B bits into the B sub-field 240 of the flag field 235. For example, when the group of SIDs has 14 bits of common prefix in the locator, the node fills in or inserts into the B sub-field 240 a numerical value 14. As such, the B sub-field 240 in the flag field 235 comprises a value of the number of data units (e.g., bits) of common prefix in the locator of the group of SIDs.

After the SRH 200 is created, the node inserts a value into the L sub-field 250 of the tag field 237 in the SRH 200. In an implementation, the node identifies unique consecutive data units in an SID of the group of the SIDs. That is, the node determines a unique suffix in the locators of the SIDs of the group. The node then determines a size of the unique suffix as L bits. Accordingly, the node inserts L bits into the L sub-field 250 of the tag field 237. As an example, when each SID in the group has unique 9 bits at an end of the locator, the node inserts a numerical value of 9 into the L sub-field. As such, the L sub-field in the tag field comprises a value of the number of data units (e.g., bits) of unique suffix in the locator of the group of SIDs.

Once the SRH is created, the node determines a pointer that points to an initial cSID (i.e., a first cSID in order) in the list of segments. The pointer can be a numerical value (e.g., 0) that indicates a location of a first data unit (e.g., a first bit) of a cSID. Subsequently, the node inserts the pointer into the cP sub-field 260. For example, the node can insert '0' as the pointer to the initial cSID into the cP sub-field 260 in the tag field 237 of the SRH 200. As such, the cP sub-field 260 in the tag field 237 comprises a pointer to one of the cSIDs.

After creating the SRH, the node generates a segment list 239. The segments in the segment list 239 are arranged in order that reflects the path of the packet. The segment list 239 includes segments each comprising a part of or whole SID. The node generates a basket 400 of the cSIDs. The basket 400 of the cSIDs includes a group of segments in the order. In an implementation, the node fills in the group of segments with the cSIDs. Accordingly, most, if not all of the segments in the group are filled with multiple cSIDs. A last segment can include just one cSID as illustrated in FIG. 4. Furthermore, the node inserts an end of compression (End-c) 430 subsequent to the last cSIDs in the order. The End-c 430 indicates that there are no more cSIDs. The End-c 430 has the same length as a cSID (i.e., the length of the unique suffix in the locator of the group of SIDs). The End-c 430 can be all zeroes or ones depending on a predefined setting. The node can append a padding 440 of all zeroes or ones following the End-c 430 in order to fill in any empty spaces in the basket 400 that stores the cSIDs.

Once the basket 400 is generated, the node can construct the segment list 239 based on the basket 400. The node constructs the segment list 239 only using the basket 400 of the cSIDs. That is, the node can only include the cSIDs in the segment list. The node constructs the segment list using both the basket 400 of the cSIDs and SIDs. The node can identify any SIDs that do not correspond to the cSIDs (that is, rest of the SIDs that are not associated with the cSIDs). The node can arrange the SIDs either in front or behind the basket of the cSIDs.

In block 570, the node adds or pushes the SRH 182 to the packet. The node also generates an internet protocol (IP) header 181 and adds the IP header 181 as an outer header to the packet 175 with the SRH 182 in such a way to encapsulate both the packet 175 and the SRH 182. The IP header 181 is an IP version 6 (IPv6) header. The IP header 181 is an IP version 4 (IPv4) header. The IP header 181 has a destination address (DA) that indicates an address of a node in the SR network domain 162, 164 where the packet is to be passed on next. A node address is represented by an SID. Accordingly, the DA is also composed of the locator, function, and arguments. The node determines an address of the next node in order based on the segment list. The address of the next node corresponds to the next SID in the segment list. The next SID may be represented by the cSID. In such a case, the node can construct an SID based on the cSID. That is, the node can prepend the common prefix of the locator to the cSID and append the common function and arguments to the cSID. The node then copies the constructed address or SID of the next node to the DA. In block 590, the node forwards the packet 175 with the SRH 182 to the next node in the SR network domain 162, 164. The packet is forwarded in accordance with the DA in the IP header 181 that is sent with the packet 175.

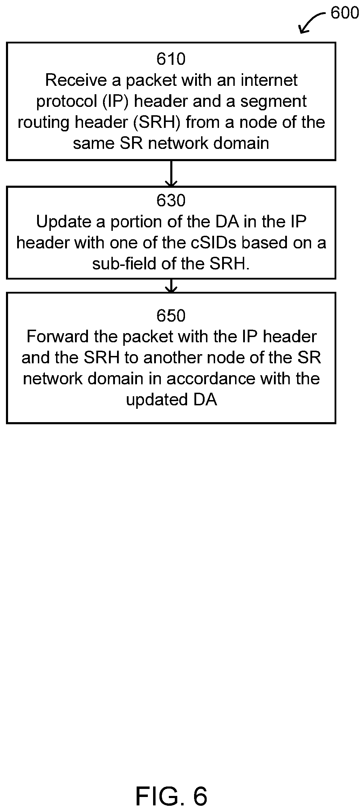

FIG. 6 illustrates an embodiment of a method 600 of forwarding a packet implemented by a node in a segment routing (SR) network domain (e.g., a transit node 165, 166). The method 600 improves the forwarding process by requiring only a portion of a destination of the packet to be updated as opposed to the entire destination address. Accordingly, the node handles a mass of packets, and less processing time and resources are needed.

In block 610, the node receives a packet 175 with an internet protocol (IP) header 181 and a segment routing header (SRH) 182 from a node of the same SR network domain 162, 164. The node is a transit node 165, 166 of the SR network domain 162, 164. On the other hand, the sending node may be an ingress node (e.g., edge node 161, 167), transit node 165, or a border node 163. The SR network domain 162, 164 is a network domain that supports an SR over Internet Protocol version 6 (SRv6) data plane.

The packet 175 is configured to pass through the SR network domain 162, 164 in accordance with segment identifiers (SIDs). The SIDs have a first number of common consecutive data units. The data unit can be a byte, nibble, or bit. As described with respect to FIG. 5 above, when a segment routing policy for an explicit traffic engineering path is applied to steer the packet at an edge node 161, 167 (e.g., the ingress node) of the network domain, SIDs are generated and added to the packet 175 to provide guidance to nodes in the network domain to navigate the packet through the path. In one embodiment, an SID has a value of 128 bits and includes a locator, function, and arguments. In an embodiment, at least some of the SIDs have a number (e.g., B bits) of common consecutive data units (e.g., a byte, nibble, or bit). For example, as illustrated in FIG. 3, a group of SIDs can have a common prefix of B bits and a unique suffix (i.e., rest of the locator) of L bits in the locator. Moreover, the group of SIDs can also include R bits of common function and arguments. Accordingly, an SID in the group comprises B bits of the common prefix, L bits of the unique suffix, and R bits of the common function and arguments in order.

The IP header 181 received with the packet 175 has a destination address (DA) that indicates an address of the node in the SR network domain. A node address is represented by an SID. In one embodiment, the IP header is an IP version 6 (IPv6) header. In another embodiment, the IP header is an IP version 4 (IPv4) header.

The SRH 182 that is also received with the packet comprises a list of segments 239, a flag field 235, and a tag field 237. The segments in the segment list 239 are arranged in order that reflects the path of the packet. The list of segments includes segments each comprising a part of or a whole SID. In one embodiment, the list of segments 239 includes a basket 400 of compressed SIDs (cSIDs) that correspond to at least some of the SIDs. The basket 400 of the cSIDs comprises a group of segments filled with the cSIDs in the order. Each cSID in the basket 400 comprises unique consecutive data units of a corresponding SID. In one embodiment, a cSID is the unique suffix of the locator having a value of L bits as illustrated in Fig. 3. In an embodiment, a last segment in the basket can include just one cSID as illustrated in FIG. 4. On the other hand, all other segments in the basket contain multiple cSIDs. Furthermore, the cSID basket 400 includes an end of compression (End-c) 430 subsequent to the last cSIDs in the order. The End-c 430 indicates that there are no more cSIDs. The End-c 430 has the same length as a cSID (i.e., the length of the unique suffix in the locator of the group of SIDs). The End-c 430 can be all zeroes or ones depending on a predefined setting. In an embodiment, the node can append a padding 440 of all zeroes or ones following the End-c 430 in order to fill in any empty spaces in the basket 400 that stores the cSIDs. In addition to the basket 400 of cSIDs, the segment list can also have one or more SIDs. The SIDs can be placed in front or behind the b asket of cSIDs.

In addition to the segment list, the SRH 200 also includes the flag field 235. The flag field 235 of the SRH 200 comprises a first sub-field (indicated by a B sub-field 240 in FIG. 2), a tag field 237 with a second sub-field (indicated by an L sub-field 250 in FIG. 2) and third sub-field (indicated by a cP sub-field 260 in FIG. 2). The B sub-field 240 of the flag field 235 is for indicating a number of common consecutive data units in the group of SIDs. For example, when the B sub-field 240 comprises a numerical value 14, this means that the group of SIDs has 14 bits of common prefix in the locator. The L sub-field 250 of the tag field 237 is for indicating a number of unique consecutive data units in the group of SIDs, as well as a size of a cSID. As an example, when the L sub-field 250 comprises a numerical value 9, the numerical value indicates that each SID in the group has unique 9 bits at an end of the locator and thus, a size of a cSID is 9 bits. The cP sub-field 260 of the tag field 237 is for indicating a pointer to one of the cSIDs. The pointer can be in a form of a numerical value, which indicates a location of a first data unit (e.g., a first bit) of a cSID in a segment. For example, if the value of cP sub-field 260 is 0, this indicates that an active cSID is the first one in a segment. An active cSID refers to a cSID that is to be processed (e.g., copied over to the DA of the IP header 181) by the destination node. In an embodiment, the SRH 200 further comprises a segment left (SL) field 220 for indicating an active segment in the segment list. An active segment refers to a segment that contains the active cSID.

In block 630, the node updates a portion of the DA in the IP header 181 with the one of the cSIDs based on the third sub-field (e.g., cP sub-field 260) of the SRH 200. In order to update the portion of the DA, the node identifies the portion of the DA to be updated using the B sub-field 240 and the L sub-field 250 of the SRH 200. In one embodiment, the node determines a starting position of the DA portion based on the value at the B sub-field of the SRH and a length of the DA portion based on the value at the L sub-field of the SRH. Then, the node further determines a location of the DA portion based on the starting point and the length. For example, the node can identify a value of 20 bits in the B sub-field and 10 bits in the L sub-field, given that the DA is 128 bits long. Accordingly, the node can determine that a portion of the DA from 21st bit to 30th bit should be updated.

After identifying the portion of the DA to be updated, the node replaces the identified portion of the DA with the one of the cSIDs indicated by the pointer of the cP sub-field 260. By using the example above, the node can replace 21st bit to 30th bit of the DA with a cSID indicated by the cP sub-field 260. In some embodiments, the node can further reference the SL field 220 to identify the cSID from the segment list for the replacement.

In replacing the DA portion with the cSID, the node determines whether the pointer of the third sub-field (e.g., cP sub-field 260) points to a cSID that spans over two segments. In response to determining that the pointer of the third sub-field points to a cSID that spans over two segments (i.e., a first part of cSID is stored in one segment and the rest of the cSID is stored in a subsequent segment), the node replaces the portion of the DA with the cSID portions from the two segments. If the node determines that the cSID indicated by the third sub-field does not span over two segments, the node proceeds to copy over the cSID as described above.

In another embodiment, the node can further determine whether the pointer of the cP sub-field 260 points to a last cSID of a segment. In response to determining that the pointer points to the last cSID of the respective segment (which may not necessarily be the last cSID in the segment list), the node updates the cP sub-field 260 with another pointer that points to an initial cSID of the next segment in order and also, updates the segment left field 220 to point to the next segment in the segment list.

Yet in another embodiment, the node can determine whether the pointer of the cP sub-field points to the End-c. That is, the node can determine whether an end of the cSID basket has been reached. The node can access a portion of the respective segment that the pointer indicates and accordingly determines whether the portion is all zeros or ones (depending on how the End-c is predefined). In addition, or in the alternative, the node can determine whether the updated portion of the DA is all zeroes or ones. If the node determines that the end of the cSID basket has been reached, the node updates the entire DA with an SID in the next segment (i.e., the segment subsequent to the basket of cSIDs). The node can further decrement the value at the SL field so that the next node accesses the next segment (the one after the segment with the SID copied to the DA). In an embodiment, the node can reset values of the B sub-field 240, L sub-field 250, and cP sub-field 260 to a default value (e.g., zero).

In block 650, after updating the portion of the DA, the node forwards the packet 175 with the IP header 181 and the SRH 182 to another node of the SR network domain in accordance with the updated DA. Accordingly, the packet 175 is forwarded to the next node indicated in the updated DA of the IP header 181. In one embodiment, after replacing the portion of the DA but before forwarding the packet, the node updates the cP sub-field 260 with another pointer that points to a different cSID (e.g., the next cSID in order) of the cSIDs.

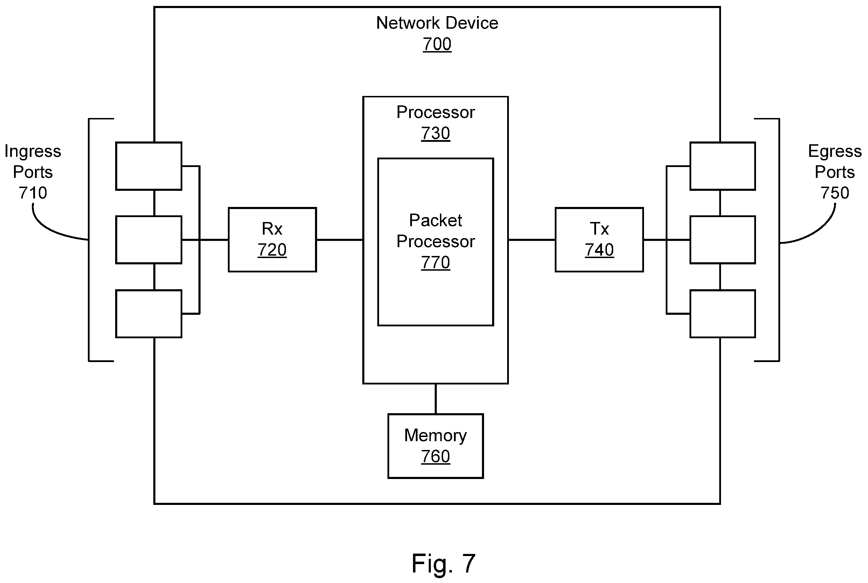

FIG. 7 is a schematic diagram of a node 700 in a segment routing (SR) network domain (e.g., an edge node 161, 167, a transit node 165, 166, or a border node 163) according to an embodiment of the disclosure. The node 700 is suitable for implementing the disclosed embodiments as described herein. The node 700 comprises ingress ports 710 and receiver units (Rx) 720 for receiving data; a processor, logic unit, or central processing unit (CPU) 730 to process the data; transmitter units (Tx) 740 and egress ports 750 for transmitting the data; and a memory 760 for storing the data. The node 700 may also comprise optical-to-electrical (OE) components and electrical-to-optical (EO) components coupled to the ingress ports 710, the receiver units 720, the transmitter units 740, and the egress ports 750 for egress or ingress of optical or electrical signals.

The processor 730 is implemented by hardware and software. The processor 730 may be implemented as one or more CPU chips, cores (e.g., as a multi-core processor), field-programmable gate arrays (FPGAs), application specific integrated circuits (ASICs), and digital signal processors (DSPs). The processor 730 is in communication with the ingress ports 710, receiver units 720, transmitter units 740, egress ports 750, and memory 760. The processor 730 comprises a packet processor 770. The packet processor 770 implements the disclosed embodiments described above. For instance, the packet processor 770 implements, generates, processes, prepares, or provides the various packet processing functions. The inclusion of the packet processor 770 therefore provides a substantial improvement to the functionality of the node 700 and effects a transformation of the node 700 to a different state. Alternatively, the packet processor 770 is implemented as instructions stored in the memory 760 and executed by the processor 730.

The memory 760 comprises one or more disks, tape drives, and solid-state drives and may be used as an overflow data storage device, to store programs when such programs are selected for execution, and to store instructions and data that are read during program execution. The memory 760 may be volatile and/or non-volatile and may be read-only memory (ROM), random access memory (RAM), ternary content-addressable memory (TCAM), and/or static random-access memory (SRAM).

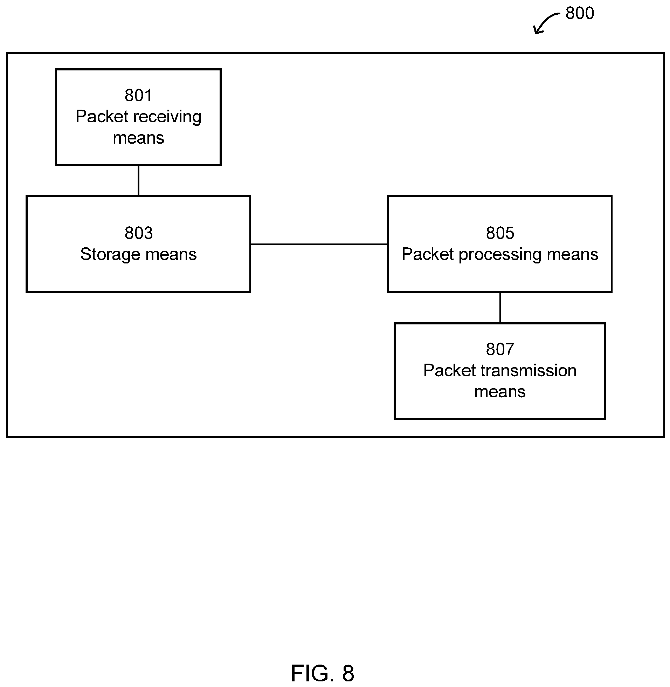

FIG. 8 is a schematic diagram of a means for forwarding a packet 800 in a segment routing (SR) network domain. The means for forwarding a packet 800 is implemented in a node (e.g., an edge node 161, 167, transit node 165, 166, or a border node 163). The means for forwarding a packet 800 includes a packet receiving means 801. The packet receiving means 801 is configured to receive a packet (sometimes, an encapsulated packet) from a node. The means for forwarding a packet 800 includes a packet transmission means 807 coupled to the packet receiving means 801. The packet transmission means 807 is configured to transmit the packet to another node.

The means for forwarding a packet 800 includes a packet processing means 805. The packet processing means 805 is coupled to at least one of the packet receiving means 801 or the packet transmission means 807.

The means for forwarding a packet 800 includes a storage means 803. The storage means 803 is coupled to at least one of the packet receiving means 801 or the packet transmission means 807. The storage means 803 is configured to store instructions. The means for forwarding a packet 800 also includes packet processing means 805. The packet processing means 805 is coupled to the storage means 803. The packet processing means 805 is configured to execute the instructions stored in the storage means 803 to perform the methods disclosed herein.

It should also be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments of the present disclosure.

## Claims

1. A method (600) implemented by a first node (700) of a segment routing, SR, network domain comprising:
receiving (610), by the first node from a second node of the SR network domain, a packet (175) with an internet protocol, IP, header (181) and a segment routing header, SRH, (182) wherein the packet (175) is passing through the SR network domain in accordance with segment identifiers, SIDs, wherein the SIDs have a first number of common consecutive data units, wherein the IP header (181) includes a destination address, ,DA, for the packet, wherein the SRH (182) comprises a segment list (188), a flag field, and a tag field, wherein the segment list (188) includes compressed SIDs, cSIDs, that correspond to at least some of the SIDs, wherein each cSID comprises unique consecutive data units of a corresponding SID, wherein the unique consecutive data units correspond to a second number of data units, wherein the flag field of the SRH (182) comprises a first sub-field having a value of the first number, wherein the tag field of the SRH comprises a second sub-field and a third sub-field, wherein the second sub-field comprises a value of the second number, and wherein the third sub-field comprises a pointer to one of the cSIDs;
updating (630), by the first node, a portion of the DA in the IP header (181) with the one of the cSIDs based on the third sub-field of the SRH (182); and
forwarding (650), by the first node, the packet with the IP header (181) and the SRH (182) to a third node of the SR network domain in accordance with the updated DA;
**characterized in that**
replacing the portion of the DA comprises, in response to determining that the pointer of the third sub-field points to a cSID that spans over two segments, replacing the portion of the DA with cSID portions from the two segments.

2. The method (600) of claim 1, wherein updating (630) the portion of the DA comprises:
identifying the portion of the DA to be updated using the first sub-field and the second sub-field of the SRH (182); and
replacing the identified portion of the DA with the one of the cSIDs indicated by the pointer of the third sub-field;
optionally, wherein identifying the portion of the DA comprises:
determining a starting position of the portion based on the value of the first number at the first sub-field of the SRH (182);
determining a length of the portion based on the value of the second number at the second sub-field of the SRH (182); and
determining a location of the portion based on the starting point and the length.

3. The method (600) of claim 2, further comprising, after replacing the portion of the DA and before forwarding the packet to the third node, updating the third sub-field with a second pointer that points to another one of the cSIDs in order;
optionally, wherein updating the third sub-field comprises, in response to determining that the pointer points to a last cSID of a segment, updating the third sub-field with the second pointer that points to an initial cSID of a next segment in the order;
optionally, wherein the SRH further comprises a segment left field for indicating a first segment in the segment list, and wherein the method further comprises in response to determining that the pointer points to a last cSID of a segment, updating the segment left field to point to a second segment that is subsequent to the first segment.

4. The method (600) of any of the preceding claims,
wherein the first node is a transit node of the SR network domain; and/or
wherein the SR network domain is a network domain supporting an SR over Internet Protocol version 6, SRv6, data plane.

5. The method (600) of any of the preceding claims, wherein the data unit is one of a byte, nibble, and bit.

6. A node device (700), comprising:
a receiver (720) configured to receive a packet;
a transmitter (740) configured to transmit the packet;
a memory (760) coupled to the receiver (720) and the transmitter (740), the memory (760) storing instructions; and
a processor (730) coupled to the memory (760), the processor (730) configured to execute the instructions to cause the node device (700) to execute the method (600) of any of claims 1 to 5.

7. A system, comprising:
a first node device; and
a second node device in communication with the first node device, wherein the first node device or the second node device includes the node device (700) of claim 6.

## Patentansprüche

1. Verfahren (600), das durch einen ersten Knoten (700) einer Netzwerkdomäne für Segment-Routing, SR-Netzwerkdomäne, implementiert wird, umfassend:
Empfangen (610) eines Pakets (175) mit einem Internetprotokoll-Header, IP-Header, (181) und einem Segment-Routing-Header, SRH, (182) durch den ersten Knoten aus einem zweiten Knoten der SR-Netzwerkdomäne, wobei das Paket (175) die SR-Netzwerkdomäne gemäß Segmentkennungen, SIDs, durchläuft, wobei die SIDs eine erste Anzahl von gemeinsamen aufeinanderfolgenden Dateneinheiten aufweisen, wobei der IP-Header (181) eine Zieladresse, DA, für das Paket beinhaltet, wobei der SRH (182) eine Segmentliste (188), ein Flag-Feld und ein Tag-Feld umfasst, wobei die Segmentliste (188) komprimierte SIDs, cSIDs, beinhaltet, die mindestens einigen der SIDs entsprechen, wobei jede cSID einzigartige aufeinanderfolgende Dateneinheiten einer entsprechenden SID umfasst, wobei die einzigartigen aufeinanderfolgenden Dateneinheiten einer zweiten Anzahl von Dateneinheiten entsprechen, wobei das Flag-Feld der SRH (182) ein erstes Teilfeld umfasst, welches einen Wert der ersten Anzahl aufweist, wobei das Tag-Feld des SRH ein zweites Teilfeld und ein drittes Teilfeld umfasst, wobei das zweite Teilfeld einen Wert der zweiten Anzahl umfasst, und wobei das dritte Teilfeld einen Zeiger auf eine der cSIDs umfasst; Aktualisieren (630) eines Abschnitts der DA in dem IP-Header (181) mit der einen der cSIDs basierend auf dem dritten Teilfeld des SRH (182) durch den ersten Knoten; und
Weiterleiten (650) des Pakets mit dem IP-Header (181) und dem SRH (182) durch den ersten Knoten an einen dritten Knoten der SR-Netzdomäne gemäß der aktualisierten DA;
**dadurch gekennzeichnet, dass**
das Ersetzen des Abschnitts der DA als Reaktion auf das Bestimmen, dass der Zeiger des dritten Teilfelds auf eine cSID zeigt, die sich über zwei Segmente erstreckt, das Ersetzen des Abschnitts der DA durch cSID-Abschnitte aus den zwei Segmenten umfasst.

2. Verfahren (600) nach Anspruch 1, wobei das Aktualisieren (630) des Abschnitts der DA Folgendes umfasst:
Identifizieren des zu aktualisierenden Abschnitts der DA unter Verwendung des ersten Teilfelds und des zweiten Teilfelds des SRH (182); und
Ersetzen des identifizierten Abschnitts der DA durch diejenige der cSID, die durch den Zeiger des dritten Teilfelds angegeben wird;
wobei das Identifizieren des Abschnitts der DA optional Folgendes umfasst:
Bestimmen einer Startposition des Abschnitts basierend auf dem Wert der ersten Anzahl in dem ersten Teilfeld des SRH (182);
Bestimmen einer Länge des Abschnitts basierend auf dem Wert der zweiten Anzahl in dem zweiten Teilfeld des SRH (182); und
Bestimmen eines Standorts des Abschnitts basierend auf dem Startpunkt und der Länge.

3. Verfahren (600) nach Anspruch 2, ferner umfassend Aktualisieren des dritten Teilfelds mit einem zweiten Zeiger, welcher der Reihe nach auf eine andere der cSIDs zeigt, nach dem Ersetzen des Abschnitts der DA und vor dem Weiterleiten des Pakets an den dritten Knoten;
wobei das Aktualisieren des dritten Teilfelds als Reaktion auf das Bestimmen, dass der Zeiger auf eine letzte cSID eines Segments zeigt, optional das Aktualisieren des dritten Teilfelds mit dem zweiten Zeiger umfasst, welcher der Reihe nach auf eine anfängliche cSID eines nächsten Segments zeigt;
wobei der SRH optional ferner ein linkes Feld des Segments zum Anzeigen eines ersten Segments in der Segmentliste umfasst, und wobei das Verfahren ferner als Reaktion auf das Bestimmen, dass der Zeiger auf eine letzte cSID eines Segments zeigt, das Aktualisieren des linken Felds des Segments umfasst, um auf ein zweites Segment zu zeigen, das auf das erste Segment folgt.

4. Verfahren (600) nach einem der vorhergehenden Ansprüche, wobei der erste Knoten ein Übergangsknoten der SR-Netzwerkdomäne ist; und/oder
wobei die SR-Netzwerkdomäne eine Netzwerkdomäne ist, die eine Datenebene der SR-über-Internetprotokollversion 6, SRv6, unterstützt.

5. Verfahren (600) nach einem der vorhergehenden Ansprüche, wobei die Dateneinheit eines von einem Byte, einem Nibble oder einem Bit ist.

6. Knotenvorrichtung (700), umfassend:
einen Empfänger (720), der dazu konfiguriert ist, ein Paket zu empfangen;
einen Sender (740), der dazu konfiguriert ist, das Paket zu übertragen;
einen Speicher (760), der mit dem Empfänger (720) und dem Sender (740) gekoppelt ist, wobei der Speicher (760) Anweisungen speichert; und
einen Prozessor (730), der mit dem Speicher (760) gekoppelt ist, wobei der Prozessor (730) dazu konfiguriert ist, die Anweisungen auszuführen, um zu bewirken, dass die Knotenvorrichtung (700) das Verfahren (600) nach einem der Ansprüche 1 bis 5 ausführt.

7. System, umfassend:
eine erste Knotenvorrichtung; und
eine zweite Knotenvorrichtung, die in Verbindung mit der ersten Knotenvorrichtung steht, wobei die erste Knotenvorrichtung oder die zweite Knotenvorrichtung die Knotenvorrichtung (700) nach Anspruch 6 beinhaltet.

## Revendications

1. Procédé (600) mis en œuvre par un premier nœud (700) d'un domaine de réseau de routage de segments, SR, comprenant :
la réception (610), par le premier nœud et provenant d'un deuxième nœud du domaine de réseau SR, d'un paquet (175) comportant un en-tête de protocole Internet, IP, (181) et un en-tête de routage de segments, SRH, (182) dans lequel le paquet (175) transite par le domaine de réseau SR selon des identifiants de segment, SID, dans lequel les SID possèdent un premier nombre d'unités de données consécutives communes, dans lequel l'en-tête IP (181) comporte une adresse de destination, DA, pour le paquet, dans lequel le SRH (182) comprend une liste de segments (188), un champ indicateur et un champ étiquette, dans lequel la liste de segments (188) comporte des SID compressés, cSID, correspondant à au moins certains des SID, dans lequel chaque cSID comprend des unités de données consécutives uniques d'un SID correspondant, dans lequel les unités de données consécutives uniques correspondent à un second nombre d'unités de données, dans lequel le champ indicateur du SRH (182) comprend un premier sous-champ ayant une valeur du premier nombre, dans lequel le champ étiquette du SRH comprend un deuxième sous-champ et un troisième sous-champ, dans lequel le deuxième sous-champ comprend une valeur du second nombre, et dans lequel le troisième sous-champ comprend un pointeur vers l'un des cSID ;
la mise à jour (630), par le premier nœud, d'une partie de la DA dans l'en-tête IP (181) avec l'un des cSID sur la base du troisième sous-champ du SRH (182) ; et
le transfert (650), par le premier nœud, du paquet avec l'en-tête IP (181) et le SRH (182) à un troisième nœud du domaine de réseau SR selon la DA mise à jour ;
**caractérisé en ce que**
le remplacement de la partie de la DA comprend, en réponse à la détermination que le pointeur du troisième sous-champ pointe vers un cSID qui s'étend sur deux segments, le remplacement de la partie de la DA par des parties de cSID provenant des deux segments.

2. Procédé (600) selon la revendication 1, dans lequel la mise à jour (630) de la partie de la DA comprend :
l'identification de la partie de la DA à mettre à jour à l'aide du premier sous-champ et du deuxième sous-champ du SRH (182) ; et
le remplacement de la partie identifiée de la DA par l'un des cSID indiqués par le pointeur du troisième sous-champ ;
éventuellement, dans lequel l'identification de la partie de la DA comprend :
la détermination d'une position de départ de la partie sur la base de la valeur du premier nombre du premier sous-champ du SRH (182) ;
la détermination de la longueur de la partie sur la base la valeur du second nombre du deuxième sous-champ du SRH (182) ; et
la détermination de l'emplacement de la partie sur la base du point de départ et de la longueur.

3. Procédé (600) selon la revendication 2, comprenant en outre, après le remplacement de la partie de la DA et avant de transférer le paquet au troisième nœud, la mise à jour du troisième sous-champ avec un second pointeur qui pointe vers un autre des cSID dans l'ordre ;
éventuellement, dans lequel la mise à jour du troisième sous-champ comprend, en réponse à la détermination que le pointeur pointe vers un dernier cSID d'un segment, la mise à jour du troisième sous-champ avec le second pointeur qui pointe vers un cSID initial d'un segment suivant dans l'ordre ;
éventuellement, dans lequel le SRH comprend en outre un champ gauche de segment pour indiquer un premier segment dans la liste des segments, et dans lequel le procédé comprend en outre, en réponse à la détermination que le pointeur pointe vers un dernier cSID d'un segment, la mise à jour du champ gauche de segment pour pointer vers un second segment qui suit le premier segment.

4. Procédé (600) selon l'une quelconque des revendications précédentes,
dans lequel le premier nœud est un nœud de transit du domaine de réseau SR ; et/ou
dans lequel le domaine de réseau SR est un domaine de réseau prenant en charge un plan de données SR sur le protocole Internet version 6, SRv6.

5. Procédé (600) selon l'une quelconque des revendications précédentes, dans lequel l'unité de données est l'un d'un octet, d'un quartet ou d'un bit.

6. Dispositif de nœud (700), comprenant :
un récepteur (720) configuré pour recevoir un paquet ;
un émetteur (740) configuré pour transmettre le paquet ;
une mémoire (760) couplée au récepteur (720) et à l'émetteur (740), la mémoire (760) stockant des instructions ; et
un processeur (730) couplé à la mémoire (760), le processeur (730) étant configuré pour exécuter les instructions afin d'amener le dispositif de nœud (700) à exécuter le procédé (600) selon l'une quelconque des revendications 1 à 5.

7. Système, comprenant :
un premier dispositif de nœud ; et
un second dispositif de nœud en communication avec le premier dispositif de nœud, dans lequel le premier dispositif de nœud ou le second dispositif de nœud comportent le dispositif de nœud (700) de la revendication 6.
